(19) Europäisches Patentamt
European Patent Office
Office européen des brevets

(11) **EP 3 604 184 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.04.2024  Patentblatt 2024/15**

(45) Hinweis auf die Patenterteilung:
**18.11.2020  Patentblatt 2020/47**

(21) Anmeldenummer: **19151462.9**

(22) Anmeldetag: **11.01.2019**

(51) Internationale Patentklassifikation (IPC):
**B65G 57/00** (2006.01)    **B65D 57/00** (2006.01)
**B65G 1/14** (2006.01)

(52) Gemeinsame Patentklassifikation (CPC):
**B65G 57/005; B65D 57/003; B65G 1/14**

(54) **VERWENDUNG VON UMWELTFREUNDLICHEM STREUGRANULAT**

USE OF AN ENVIRONMENTALLY-FRIENDLY SPREAD GRANULATE

UTILISATION DE GRANULÉS À ÉPANDRE FAVORABLE À L'ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018  DE 102018118599**

(43) Veröffentlichungstag der Anmeldung:
**05.02.2020  Patentblatt 2020/06**

(73) Patentinhaber:
• **BPB Beton- und Prüftechnik Blomberg GmbH & Co. KG**
**32825 Blomberg (DE)**
• **Biofibre GmbH**
**84032 Altdorf (DE)**

(72) Erfinder:
• **Goldschmidt, Matthias**
**32825 Blomberg (DE)**
• **Dörrstein, Jörg**
**84032 Altdorf (DE)**

(74) Vertreter: **Sandvoß, Stefanie**
**Patentanwaltskanzlei Sandvoß**
**Dethmarstraße 44a**
**31139 Hildesheim (DE)**

(56) Entgegenhaltungen:
WO-A2-2005/118286    JP-A- H07 133 134
JP-A- 2003 237 916    US-A- 4 200 670

EP 3 604 184 B2

## Beschreibung

Die Erfindung betrifft die Verwendung von umweltfreundlichem Streugranulat als Distanzmaterial für die Lagerung von Bodenbelagsmaterialien, wie z.B. Betonwaren, insbesondere von mineralischen Belägen wie künstlichen Steinen, künstlichen Platten, keramischen Fliesen, Natursteinen und Natursteinplatten.

Es ist bekannt, Streugranulat bei der Lagerung von Betonwaren, insbesondere Platten und Steinen, z.B. Dekor-Steinen und Pflastersteinen, zwischen den einzelnen übereinander gestapelten Lagen als Distanzmaterial anzuordnen. Als Distanzmaterial bewirkt das Streugranulat, dass eine Luftzirkulation zwischen den einzelnen Lagen ermöglicht wird und Feuchtigkeit besser aus den Zwischenräumen entweichen kann bzw. deren Eindringen in die Stapelung aufgrund geringerer Kapillarkräfte vermindert wird. Dies hat insbesondere zur Folge, dass das Ausblührisiko aufgrund der besseren Durchlüftung erheblich vermindert wird.

Weiterhin dient das Streugranulat auch als Kratzschutz für aufeinander gestapelte Lagen von z.B. Steinen oder Platten, insbesondere für veredelte Betonwaren. Denn bei der lagenweisen Stapelung von Betonwaren mit einer veredelten Oberseite, beispielsweise von Pflastersteinen mit Vorsatzschicht, wird jeweils auf der veredelten Oberseite einer ersten Lage eine zweite Lage Betonwaren angeordnet, die ohne entsprechendes Distanzmaterial die Oberseiten der darunterliegenden Lage leicht zerkratzen würden.

Insbesondere in Form von linsenförmigen Granulatkörnern weist das Streugranulat zusätzlich zu den vorgenannten Vorteilen der Luftzirkulation und des Kratzschutzes zwischen den einzelnen Lagen den weiteren Vorteil einer Lagensicherung auf. Denn die linsenförmigen Granulatkörner wirken aufgrund ihrer von einer sphärischen Geometrie abweichenden Form und dem damit verbundenen höheren Roll- und Gleitwiderstand rutschhemmend und sichern die gestapelten Produkte gegen Verrutschen oder Verschieben.

Das aus dem Stand der Technik bekannte Streugranulat besteht in der Regel aus biologisch nicht abbaubaren Kunststoffen, wie beispielsweise LDPE (weich-Polyethylen; englisch: Low Density Polyethylene), oder aus vergleichbaren Werkstoffen, wie z.B. Gummi, insbesondere vulkanisiertem Kautschuk oder Synthese-Kautschuk.

Ein großer Nachteil des aus dem Stand der Technik bekannten Streugranulats liegt jedoch in dessen fehlender Umweltverträglichkeit. Denn sowohl Gummi als auch LDPE sind biologisch nicht abbaubar. Für die Entnahme der lagenweise gestapelten und paketierten Betonwaren wird in der Regel das Paket am Verwendungsort geöffnet und die darin befindlichen Betonwaren werden entnommen, während das zwischen den einzelnen Lagen befindliche Streugranulat zu Boden fällt und aufgrund seiner geringen Größe auch häufig dort vergessen und nicht fachgerecht entsorgt wird. Doch trotz der geringen Größe der einzelnen Streugranulatkörner entsteht bei jeder verwendeten Paketierung eine beachtliche Menge an in die Umwelt gelangtem Streugranulat, da von diesem üblicherweise 10-15 g/m$^2$ als Distanzmaterial verwendet werden. Da weder LDPE noch Gummi biologisch abbaubar sind, gelangen diese durch Umwelteinflüsse mit der Zeit ins Gewässer und belasten dort z.B. als Mikroplastikmüll die Meere und Küsten oder werden von Meerestieren oder Seevögeln aufgenommen. Darüber hinaus werden bei der Gewinnung, Herstellung und Entsorgung von vielen fossil-basierten Kunststoffen sehr große Mengen des Treibhausgases $CO_2$ emittiert, wodurch eine Klimaschädigung durch die Verwendung von konventionellen Kunststoffen als Streugranulat nicht auszuschließen ist.

Die EP 1 520 871 A1 beschreibt eine Verwendung nach dem Oberbegriff des Anspruchs 1 und ein Granulat auf Gummibasis, das dadurch eine geringere Umweltbelastung darstellen soll, dass es einen Kern aus zerkleinertem Gummimaterial enthält, der von einer äußeren Schicht umgeben ist, die aus einem Bindemittel sowie einem mineralischen Material und/oder einem Faserfüllstoff-Material besteht. Das Granulat soll als Einstreumaterial für große Flächen, wie z.B. Kunstrasen, geeignet sein. Aufgrund seiner Zusammensetzung ist das Granulat jedoch nicht vollständig biologisch abbaubar und ökotoxikologisch nicht unbedenklich, sondern stellt lediglich eine geringere Umweltbelastung dar als Granulate, die vollständig aus Gummi oder LDPE bestehen.

Holzspäne oder Verpackungschips aus Maisstärke sind für eine Verwendung als Distanzmaterial für die Lagerung von Betonwaren ebenfalls ungeeignet, da sie zwar ökologisch unbedenklich sind, jedoch keine ausreichende Stabilität gegenüber Druck und Hydrolyse aufweisen. Des Weiteren weisen Holzspäne und Verpackungschips als Naturstoffe einen zu hohen Gehalt an Extraktstoffen sowie einen zu hohen Wassergehalt und eine zu geringe Rohdichte auf und sind daher auch aus diesem Grund ungeeignet als Distanzmaterial für die Lagerung von Betonwaren.

## Aufgabe der Erfindung

Es ist die Aufgabe der vorliegenden Erfindung, ein alternatives Streugranulat für die Verwendung als Distanzmaterial für die Lagerung von Bodenbelagsmaterialien bereitzustellen, das die vorgenannten aus dem Stand der Technik bekannten Nachteile überwindet und sich vorzugsweise durch einen hohen Anteil an biobasiertem Material sowie idealerweise durch eine hervorragende Umweltverträglichkeit auszeichnet.

**EP 3 604 184 B2**

## Allgemeine Beschreibung der Erfindung

Die Erfindung löst diese Aufgabe mit den Merkmalen der Ansprüche und insbesondere mit der Verwendung eines Streugranulats, das zu einem Anteil von 39 bis 100 Gew.-%, zumindest ein nach DIN EN ISO 13432 biologisch abbaubares Polymer umfasst, wobei die Streugranulatkörner in einer ersten Dimension eine mindestens um den Faktor 1,275 größere Ausdehnung aufweisen als in einer zweiten Dimension. Die erfindungsgemäße Verwendung des Streugranulats erfolgt dabei als Distanzmaterial für die Lagerung von Bodenbelagsmaterialien, insbesondere von Betonwaren, wie z.B. Steinen, Platten und Natursteinplatten.

Bei der erfindungsgemäßen Verwendung des Streugranulats als Distanzmaterial für Bodenbelagsmaterialien wird das Streugranulat zwischen den übereinander gestapelten und insbesondere paketierten Lagen von Bodenbelagsmaterialien angeordnet. Als Distanzmaterial für die Bodenbelagsmaterialien sollte das Streugranulat dabei insbesondere zwei Funktionen erfüllen, die scheinbar gegenläufige Eigenschaften erfordern. Denn zum einen muss das Streugranulat hinreichend stabil, insbesondere druckstabil, nahezu wasserunlöslich und bedarfsgerecht hydrolysestabil sein, um auch noch nach einigen Wochen, insbesondere im Freien, die einzelnen Lagen der übereinander gestapelten Bodenbelagsmaterialien auf Distanz zu halten und somit insbesondere eine gute Durchlüftung sowie Kratzschutz zu gewährleisten. Zum anderen soll sich das Streugranulat, das bei der Entnahme der Bodenbelagsmaterialien aus der Paketierung herausfällt und oftmals im Bereich der Entnahmestelle verbleibt, möglichst rückstandsfrei in ökotoxikologisch unbedenkliche Substanzen und Stoffwechselprodukte zersetzen, um die Umwelt nicht zu belasten.

Das erfindungsgemäß verwendete Streugranulat erfüllt diese beiden Funktionen hervorragend. Es ist nicht nur hinreichend stabil, sondern ökotoxikologisch auch völlig unbedenklich, d.h. umwelt- und gesundheitsfreundlich, und wird bei einer Lagerung unter Kompostierbedingungen nach DIN EN ISO 13432 vollkommen biologisch abgebaut. In der industriellen Kompostierung wird das Streugranulat vorzugsweise rückstandsfrei zersetzt, während es auch in der freien Natur durch natürliche Hydrolyseprozesse sowie oxidativ durch Luftsauerstoff zerkleinert und schließlich durch im Boden befindliche Mikroorganismen verstoffwechselt wird, z.B. innerhalb eines Zeitraumes von maximal zwei Jahren. Die einzigen Zersetzungs- und Stoffwechselprodukte sind dabei Biomasse, Kohlenstoffdioxid, Methan und Wasser.

Erfindungsgemäß weist das verwendete Streugranulat einen Anteil an biobasiertem Material von mindestens 20 Gew.-%, bevorzugt von mindestens 50 Gew.-% und besonders bevorzugt von mindestens 85 Gew.-% auf. Insbesondere liegt der Anteil von biobasiertem Material an dem Streugranulat bei > 90 Gew.-%, > 95 Gew.-% oder sogar bei > 97 Gew.-%.

Erfindungsgemäß enthält das Streugranulat zumindest ein nach DIN EN ISO 13432 biologisch abbaubares Polymer, das insbesondere ein aus Monomeren künstlich synthetisiertes Monomer ist. Dieses Polymer kann ein biobasiertes Polymer, z.B. Polymilchsäure (PLA), Polyhydroxyalkanoat (PHA) oder Stärke-Blends sein, oder alternativ ein nicht biobasiertes Polymer, wie z.B. Polycaprolactone (PCL) oder Polybutylen-adipat-terephthalat (PBAT). Weiter alternativ kann das biologisch abbaubare Polymer auch ein teilweise biobasiertes Polymer sein, beispielsweise Polybutylensuccinat (PBS) oder Polybutylensuccinat-adipat (PBSA). Gemäß einer weiteren Alternative kann das in dem Streugranulat enthaltene biologisch abbaubare Polymer auch aus der Gruppe ausgewählt sein, die Polysaccharid-Derivate umfasst, in denen funktionelle Gruppen eines natürlichen Polymers, z.B. OH- und/oder $NH_2$-Gruppen, vollständig oder teilweise substituiert sind. Beispiele für solche sog. Polysaccharid-Derivate sind Celluloseester (z.B. Celluloseacetat, Celluloseacetatbutyrat, Celluloseacetatpropionat), Stärkeester (z.B. Stärkeacetat, acetyliertes Distärkeadipat) oder teilweise deacetylierte Chitin und dessen Derivate.

Optional enthält das erfindungsgemäß verwendete Streugranulat auch mehrere verschiedene insbesondere nach DIN EN ISO 13432 biologisch abbaubare Polymere, die unabhängig voneinander jeweils biobasiert, nicht biobasiert oder teilweise biobasiert sein können. Die Polymere können dabei insbesondere ausgewählt sein aus der Gruppe, die Polymilchsäure, Polyhydroxyalkanoat, Stärke-Blends, Polycaprolacton, Polybutylen-adipat-terephthalat, Polybutylensuccinat, Polybutylensuccinat-adipat, Poly([R]-3-hydroxybutyrat-co-[R]-3-hydroxyhexanoat) und Polysaccharid-Derivate umfasst oder daraus besteht.

Generell kann das als Distanzmaterial verwendete Streugranulat Primär- und/oder Sekundärrohstoffe umfassen oder aus diesen bestehen, wobei die Primär- und/oder Sekundärrohstoffe ebenfalls bioabbaubar und vorzugsweise nach DIN EN ISO 13432 zertifiziert sind.

Es ist bevorzugt, dass das zumindest eine in dem als Distanzmaterial verwendeten Streugranulat enthaltene biologisch abbaubare Polymer weitestgehend unlöslich in Wasser ist und insbesondere eine Löslichkeit von < 0,1 mol/L aufweist. Denn für den erfindungsgemäßen Einsatzzweck als Distanzmaterial für aufeinander gestapelte Lagen von Bodenbelagsmaterialien ist es erforderlich, dass das Streugranulat über einen längeren Zeitraum formstabil ist und sich nicht bei Kontakt mit Wasser auflöst. Aufgrund ihrer Wasserlöslichkeit sind beispielsweise Polyvinylalkohole für den genannten Einsatzzweck ungeeignet, obwohl sie ebenfalls biologisch abbaubar sind.

Um als Kratzschutz fungieren zu können, weist das Streugranulat eine Mohs'sche Härte auf, die an der Oberfläche geringer ist als die Mohs'sche Härte der zu schützenden Bodenbelagsmaterialien.

Das erfindungsgemäß als Distanzmaterial für Bodenbelagsmaterialien eingesetzte Streugranulat kann optional aus dem zumindest einen biologisch abbaubaren Polymer, das insbesondere ein Biokunststoff ist, bestehen oder dieses zu einem Anteil von mindestens 39 Gew.-% enthalten. In Ausführungsformen, in denen das Streugranulat mehr als nur ein nach DIN EN ISO 13432 biologisch abbaubares Polymer enthält, beträgt der Gesamtanteil aller entsprechenden in dem Streugranulat enthaltenen Polymere 39 bis 100 Gew.-%.

Optional enthält das verwendete Streugranulat zusätzlich zu dem zumindest einen biologisch abbaubaren Polymer auch bis zu 61 Gew.-% oder bis zu 90 Gew.-% eines faserigen und/oder partikulären Füllstoffs. Unter einem faserigen Füllstoff wird dabei ein Füllstoff mit beliebiger Geometrie verstanden, dessen Verhältnis von mittlerer Länge zu mittlerem Durchmesser (abgekürzt l/d) > 10 beträgt. Dieser sog. Formfaktor (engl. aspect ratio) beschreibt damit das Verhältnis von Länge zu Dicke des Teilchens. Im Gegensatz dazu weist ein partikulärer Füllstoff ein Verhältnis von l/d < 10 auf. Bei den faserigen und partikulären Füllstoffen handelt es sich insbesondere um lignocellulose- und cellulosehaltige Materialien. Insbesondere kann der faserige Füllstoff und/oder der partikuläre Füllstoff aus der Gruppe ausgewählt sein, die Cellulose, Hemicellulose, Lignin und Asche sowie insbesondere Holzmehl und Holzfasern umfasst. Alternativ kann der faserige Füllstoff auch mineralische (d.h. anorganische) Fasern wie z.B. Glasfasern, insbesondere E-Glasfasern, umfassen oder daraus bestehen.

Gemäß einer besonders vorteilhaften Ausführung beträgt der Füllstoffanteil des als Distanzmaterial verwendeten Streugranulats z.B. bis zu 30 Gew.-%, insbesondere 20 Gew.-%, um die Kriechneigung (Verhältnis von Anfangsstauchung zu Gesamtstauchung), d.h. die Langzeitverformung, zu reduzieren oder für den Anwendungsfall nahezu aufzuheben, z.B. bei einem Kriechverhältnis von < 50 %, < 40 %, < 30 %, < 20 % oder < 10 %.

Optional enthält das Streugranulat zudem auch zumindest ein Verarbeitungshilfsmittel, zumindest ein Mittel zur Steigerung der Schmelzefestigkeit, zumindest ein Hydrophobierungsmittel und/oder zumindest ein Kopplungsmittel. Bevorzugt beträgt der Gehalt an Verarbeitungshilfsmitteln, Mitteln zur Steigerung der Schmelzefestigkeit, Hydrophobierungsmitteln und Kopplungsmitteln dabei jeweils max. 10 Gew.-%.

Als Verarbeitungshilfsmittel können insbesondere Polyvinylacetat (PVAC) und/oder $N,N'$-Ethylendi(stearamid) (EBS) in dem Streugranulat enthalten sein. Polyvinylacetat ist zugleich auch ein bevorzugtes Mittel zur Steigerung der Schmelzefestigkeit. Weitere geeignete Mittel zur Steigerung der Schmelzefestigkeit sind Elastomere (z.B. Naturkautschuk) oder Additive auf Basis von Ethylen-Maleinsäure-Glycidylmethacrylat (E-MA-GMA).

Unter Schmelzefestigkeit bzw. Schmelzestabilität wird für die Zwecke der Erfindung der Widerstand einer Schmelze gegen Verformung bei definierten Bedingungen verstanden. Viele bioabbaubare Polyester wie Polymilchsäure (PLA) neigen dazu, während der Verarbeitung bzw. während des Formens eine zu starke Strukturviskosität (Scherverdünnung) bei Dehnbeanspruchung aufzuweisen. Der Hintergrund ist die freie Beweglichkeit der nicht sehr hochmolekularen und nicht oder nur gering verzweigten bis linearen Polymerketten. Häufig zeigen diese Polymere auch eine sehr enge Molekulargewichtsverteilung. Durch die Verwendung von hochmolekularen Polymeren und Langkettenverzweigungen kann die Eigenschaft der Scherverdünnung bei Dehnverformung in die Eigenschaft der Scherverfestigung bei Dehnbeanspruchung umgekehrt werden.

Bevorzugte Hydrophobierungsmittel sind Paraffin, Fischer-Tropsch-Wachse (FT-Wachse) oder Mischungen dieser, sowie weitere bzw. andere Kohlenwasserstoffe, da diese die Wasseraufnahme verlangsamen.

Bevorzugte Kopplungsmittel sind z.B. Maleinsäureanhydrid gepfropfte Polymere, beispielsweise Maleinsäureanhydrid gepfropftes Polypropylen (MAPP).

Optional kann das als Distanzmaterial verwendete Streugranulat überdies auch weitere Additive enthalten, die üblicherweise in der Kunststoffindustrie Verwendung finden, insbesondere Pigmente, Farbstoffe, UV-Stabilisatoren, Lichtstabilisatoren und/oder Flammschutzmittel.

Gemäß einer Ausführungsform beträgt die Rohdichte des als Distanzmaterial verwendeten Streugranulats 0,8 bis 2,0 g/cm$^3$, insbesondere 0,9 bis 1,4 g/cm$^3$. Die Rohdichte bezeichnet dabei das Verhältnis der Masse des Granulats zu dessen Volumen einschließlich etwaiger Porenräume. Die Rohdichte ist so gewählt, dass das Streugranulat problemlos auch mit automatisierten Streugeräten ausgebracht und auf der Betonware verteilt werden kann. Ein Nachteil von Materialien mit einer zu geringen Rohdichte ist das für die erfindungsgemäße Anwendung ungünstige Oberfläche-zu-Masse-Verhältnis. So werden Naturstoffe wie Kork oder Holz durch Windkraft während des Verstreuens weggetragen oder im Anschluss an das Ausstreuen weggetragen und sind somit nicht mehr auf der Betonware verortet und ein Teil des applizierten Streumaterials geht der erfindungsgemäßen Verwendung verloren. Daher muss das Streugranulat eine ausreichend hohe Rohdichte aufweisen um der im Außenbereich auftretenden Windkraft ausreichende Gegenkräfte (v.a. Gewichtskraft) entgegenzusetzen um eine Bewegung des Streugranulats zu verhindern.

Streugranulate müssen zudem beständig gegen Frost-Tau-Beanspruchung sein. Ein zu hoher Wassergehalt führt zur Fragmentierung, wodurch die Distanz zwischen den gestapelten Bodenbelagsmaterialien reduziert wird und damit kein ausreichender Kratzschutz und keine ausreichende Belüftung gewährleistet werden kann. Ein hoher Wassergehalt nach Wasserlagerung ist typisch für Naturstoffe wie Stärke und Holz sowie für stark hygroskopische synthetische Polymere wie Polyvinylalkohol (PVA). Ein zu geringer Wassergehalt und/oder eine zu geringe Aufnahme von Wasser ist hingegen hinderlich für chemisch-physikalische Hydrolyseprozesse im Boden, die eine biologische Abbaubarkeit ermöglichen oder begünstigen.

Das erfindungsgemäß als Distanzmaterial verwendete Streugranulat weist nach Wasserlagerung vorzugsweise einen Wasseranteil von 0,5 bis 20 Gew.-% auf, bezogen auf die Trockenmasse (Testbedingungen: Lagerungszeit unter Wasser bei 20 °C: 5 Tage (> 100 Stunden), Bestimmung des Wassergehaltes nach Laboratory Analytical Procedure (LAP) NREL/TP-510-42621 Determination of Total Solids in Biomass and Total Dissolved Solids in Liquid Process Samples, (https://www.nrel.gov/docs/gen/fy08/42621.pdf, Zugriff am 14.12.2018)).

Gemäß einer Ausführungsform beträgt der Anteil an mit Wasser und Ethanol extrahierbaren Stoffen in dem erfindungsgemäß als Distanzmaterial für Bodenbelagsmaterialien verwendeten Streugranulat bevorzugt < 1 Gew.-%. Viele Naturstoffe wie z.B. Holz, z.B. in der Form von Holzspänen und Holzpellets, besitzen einen speziellen Aufbau. Neben den Hauptbestandteilen der verholzten Zellwand wie Cellulose, Hemicellulose und Lignin treten eine Vielzahl von akzessorischen Bestandteilen, sog. Extraktstoffe, auf. Solche Extraktstoffe können stark farbgebend sein und eine Verwendung von solchen Naturstoffen bei Druckbeanspruchung durch Überlagerung mit Betonware kann zur verstärkten Mobilisierung dieser Extraktstoffe aus der Zellwand führen. Dadurch kann es zur unerwünschten und nur schwer zu entfernenden Fleckenbildung auf Dekorbetonsteinen kommen. Darüber hinaus sind manche bioabbaubare Kunststoffe wie stark hygroskopische Polyvinylalkohole (PVA) teilweise oder vollständig wasserlöslich. Derartige Stoffe eignen sich nicht für die erfindungsgemäße Anwendung, da sie dringend erforderliche Merkmale hinsichtlich z.B. Verhalten im Zuge einer Druckbeanspruchung und Eignung als Distanzmaterial für verbesserte Durchlüftung aufgrund der sich lösenden Bestandteile vermissen lassen.

Die Bestimmung des Extraktstoffgehalts wird z.B. gemäß der Laboratory Analytical Procedure (LAP) NREL/TP-510-42619: Determination of Extractives in Biomass Laboratory Analytical Procedure (LAP) (https://www.nrel.gov/docs/gen/fy08/42619.pdf, Zugriff am 14.12.2018) durchgeführt.
Der Anteil der in Wasser und Ethanol löslichen Extraktstoffe kann über Gleichung 1 berechnet werden:

$$E = (m_1 - m_2) / m_1 * 100 \hspace{4cm} \text{(Gleichung 1)}$$

$E$      *Extraktstoffgehalt (%)*
$m_1$     *Masse Material vor Extraktion (absolut trocken) (g)*
$m_2$     *Masse des extrahierten Materials (absolut trocken) (g)*

Erfindungsgemäß umfasst oder besteht das Streugranulat aus Streugranulatkörnern, die in einer ersten Dimension eine mindestens um den Faktor 1,275 größere Ausdehnung aufweisen als in einer zweiten Dimension. Unter Dimension wird hierbei die Länge, Breite und Höhe der Streugranulatkörner verstanden, beispielsweise kann die Länge als erste Dimension verstanden werden, während die Höhe die zweite Dimension und die Breite die dritte Dimension ist. Aufgrund der mindestens um den Faktor 1,275, bevorzugter mindestens um den Faktor 1,5 und noch bevorzugter mindestens um den Faktor 2 größeren Ausdehnung der ersten Dimension im Vergleich zur zweiten Dimension weisen die Streugranulatkörner keine sphärische Form auf, sondern sind beispielsweise linsenförmig oder ellipsoid. Alternativ können die Streugranulatkörner auch die Form eines Zylinders, eines Hohlzylinders oder eines Torus aufweisen.

Erfindungsgemäß können zwei der drei Dimensionen der Streugranulatkörner eine gleich große oder nur geringfügig voneinander abweichende (bis ca. 10 %) Ausdehnung haben, während die dritte Dimension sich mindestens um den Faktor 1,275 in ihrer Ausdehnung von den anderen beiden Dimensionen unterscheidet. Es können jedoch auch alle drei Dimensionen unterschiedliche Ausdehnungen aufweisen. In allen Ausführungsformen zeichnet sich das erfindungsgemäß verwendete Streugranulat dabei durch seine hohe Formstabilität aus.

In bevorzugten Ausführungsformen weisen die Streugranulatkörner eine Länge und Breite auf, die zwischen 4 und 10 mm, insbesondere zwischen 5 und 6 mm, liegt und optional gleich oder unterschiedlich ist. Die Höhe der Streugranulatkörner liegt bevorzugt zwischen 1 und 4 mm.

Im Gegensatz zu herkömmlichem als Distanzmaterial für Bodenbelagsmaterialien verwendetem Streugranulat, beispielsweise Streugranulat aus LDPE, weist das gemäß der vorliegenden Erfindung als Distanzmaterial verwendete Streugranulat ein deutlich besseres Verformungsverhalten unter Druckbeanspruchung auf. Um ein Korn aus LDPE mit einem mittleren Durchmesser von 5,5 mm und einer mittleren Höhe von 2,2 mm um 10 % zu stauchen, ist im trockenen wie auch im nassen Zustand ein Kraftaufwand von 73 N erforderlich, während der Kraftaufwand bei dem erfindungsgemäß verwendeten Streugranulat bei gleicher Geometrie im trockenen Zustand 200 N bzw. im nassen Zustand (nach 24 Stunden Wasserlagerung) 130 N beträgt. Die Druckspannung bezogen auf den mittleren Streugranulatdurchmesser bei um 10 % gestauchtem LDPE beträgt dementsprechend 3,1 MPa, während sie bei um 10 % gestauchtem und feuchtem erfindungsgemäßen Streugranulat 5,5 MPa und bei um 10 % gestauchtem und trockenem erfindungsgemäßen Streugranulat 8,4 MPa beträgt. Nach Applikation des erfindungsgemäßen Streugranulats ergeben sich somit sowohl im feuchten als auch im trockenen Zustand größere Distanzen zwischen den Bodenbelagsmateriallagen, wodurch bei gleichbleibendem Materialeinsatz für glatte Oberflächen eine bessere Durchlüftung unmittelbar nach der Applikation gewährleistet werden kann.

EP 3 604 184 B2

Das für die erfindungsgemäße Verwendung benötigte Streugranulat kann in einem Verfahren hergestellt werden, in dem eine Ausgangszusammensetzung mit einem Anteil von 39 bis 100 Gew.-% zumindest eines nach DIN EN ISO 13432 biologisch abbaubaren Polymers bereitgestellt und mittels eines Mischaggregats zu einer homogenen Masse plastifiziert wird, wobei die homogene Masse zu Streugranulatkörnern geformt wird, die in einer ersten Dimension eine mindestens um den Faktor 1,275 größere Ausdehnung aufweisen als in einer zweiten Dimension. Als Mischaggregat kann dabei insbesondere ein diskontinuierlich arbeitender Innenmischer oder ein kontinuierlich arbeitender Extruder eingesetzt werden.

Bei diesem Verfahren hat das erzeugte Streugranulat die gleiche Beschaffenheit wie im Voranstehenden beschrieben, d.h. insbesondere die im Voranstehenden beschriebene Zusammensetzung und Geometrie.

In dem Verfahren zur Herstellung des Streugranulats wird die Ausgangszusammensetzung, die das zumindest eine nach DIN EN ISO 13432 biologisch abbaubare Polymer enthält oder daraus besteht, in ein Mischaggregat, z.B. einen Schneckenextruder, einen Doppelschneckenextruder oder einen Innenmischer, gegeben und in diesem bei Temperaturen von 160 bis 220 °C, insbesondere bei etwa 180 °C, zu einer homogenen Masse plastifiziert.

Gemäß einer bevorzugten Ausführungsform des Verfahrens wird die homogene Masse in einem Extruder bereitgestellt und anschließend mittels Unterwassergranulierung zu Streugranulatkörnern geformt. Dazu wird die homogene Masse zunächst durch eine Düsenplatte mit darin befindlichen Löchern bewegt. Mittels eines Schneidinstrumentes wird die zu einem Strang extrudierte Masse daraufhin in Filamente geschnitten, die in ein Behältnis mit Wasser gegeben werden.

Im Wasser nehmen die einzelnen Filamente daraufhin üblicherweise eine sphärische oder eine von einer sphärischen Form nur geringfügig abweichende quasi-sphärische Form ein.

Streugranulatkörner mit sphärischer oder quasi-sphärischer Geometrie sind für den beabsichtigten Einsatzzweck als Distanzmaterial zwischen aufeinander gestapelten Lagen von Bodenbelagsmaterialien jedoch ungeeignet, da diese nicht die gewünschte Rutschhemmung bieten und der Rollweg beim Ausbringen zu hoch ist.

Bevorzugt werden daher durch Unterwassergranulierung erhaltene sphärische oder quasi-sphärische Streugranulatkörner in einem nachfolgenden Verfahrensschritt in eine Form gebracht, in der sie in einer ersten Dimension eine mindestens um den Faktor 1,275 größere Ausdehnung aufweisen als in einer zweiten Dimension. Dies kann insbesondere durch Pressen erfolgen, beispielsweise mittels einer Formpresse, einer servohydraulischen Presse oder mittels einer Bandpresse.

Es ist jedoch auch möglich, durch eine gezielte Auswahl der Bestandteile der Ausgangszusammensetzung durch Unterwassergranulierung direkt Streugranulatkörner mit der gewünschten von einer sphärischen Form abweichenden Geometrie zu erhalten, in der die Streugranulatkörner in einer ersten Dimension eine mindestens um den Faktor 1,275 größere Ausdehnung aufweisen als in einer zweiten Dimension. Für den Erhalt solcher nicht sphärischen Streugranulatkörner mittels Unterwassergranulierung eignet sich insbesondere eine Zusammensetzung, die Poly([R]-3-hydroxybutyrat-co-[R]-3-hydroxyhexanoat) (PHBH), Polymilchsäure (PLA), ein Verarbeitungshilfsmittel sowie einen faserigen Verstärkungsstoff enthält. Insbesondere sollte die Ausgangszusammensetzung dabei 60 Gew.-% Poly([R]-3-hydroxybutyrat-co-[R]-3-hydroxyhexanoat) (PHBH), 5 Gew.-% Polymilchsäure (PLA), 10 Gew.-% eines Verarbeitungshilfsmittels, insbesondere Polyvinylacetat (PVAC) sowie 25 % eines faserigen Verstärkungsstoffs, insbesondere Holzfaser, enthalten.

Alternativ zu einer Unterwassergranulierung kann die Granulierung auch mittels einer Wasserringgranulierung bzw. mittels eines Heißabschlags an Luft erfolgen. Dafür wird die Ausgangszusammensetzung, die das zumindest eine nach DIN EN ISO 13432 biologisch abbaubare Polymer enthält oder daraus besteht, ebenfalls in ein Mischaggregat, z.B. einen Schneckenextruder oder einen Doppelschneckenextruder, gegeben und in diesem bei Temperaturen von 160 bis 220 °C, insbesondere bei etwa 180 °C, zu einer homogenen Masse plastifiziert. Nach der Hindurchführung der homogenen Masse durch eine Düsenplatte wird der extrudierte Strang von rotierenden Messern abgeschlagen, wobei die Länge der Schneidprodukte bzw. das Verhältnis ihrer Länge zum Durchmesser durch Variation der Rotationsgeschwindigkeit der Messer eingestellt wird. Die dabei entstehenden linsenförmigen Granulate werden in einen umlaufenden Wasserring geschleudert.

Alternativ zu der Unterwassergranulierung und der Wasserringgranulierung können die Streugranulatkörner auch durch Ausstanzen aus einer extrudierten Platte erhalten werden. In dieser Ausführungsform wird die im Mischaggregat plastifizierte und homogenisierte Masse durch eine Breitschlitzdüse zu einer Platte geformt. Nach dem Abkühlen der Platte und optionalem Walzen werden mittels geeigneter Stanzwerkzeuge Streugranulatkörner aus der Platte ausgestanzt. Bevorzugte Geometrien der Streugranulatkörner sind dabei plättchenförmig, zylinderförmig und hohlzylinderförmig, wobei die gewünschte Geometrie durch Auswahl eines entsprechenden Stanzwerkzeugs zu erreichen ist. Die beim Stanzen entstehenden Reste der Platte können anschließend wieder als Ausgangszusammensetzung eingesetzt werden, wodurch bei kontinuierlicher Verfahrensführung vorzugsweise keine Stanzreste anfallen.

Eine weitere Möglichkeit zur Herstellung von Streugranulatkörnern, die in einer ersten Dimension eine mindestens um den Faktor 1,275 größere Ausdehnung aufweisen als in einer zweiten Dimension, liegt darin, die das zumindest eine nach DIN EN ISO 13432 biologisch abbaubare Polymer enthaltende Ausgangszusammensetzung nach

6

dem Plastifizieren im Mischaggregat durch eine Düsenplatte zu Schmelzesträngen zu extrudieren, die zum Kühlen durch ein Wasserbad gezogen und anschließend im festen Zustand durch eine rotierende Messerwalze geführt werden, wobei durch die Rotations- und Zuführgeschwindigkeit die Größe der Streugranulatkörner variiert werden kann. Bei dieser auch als Kaltabschlag bezeichneten Methode werden zylindrische oder quasi-zylindrische Streugranulatkörner erhalten.

Bei der erfindungsgemäßen Verwendung wird das Streugranulat als Distanzmaterial für die Lagerung von Bodenbelagsmaterialien wie Betonwaren, insbesondere von Platten und Steinen, beispielsweise von Dekor-Steinen und Pflastersteinen, zwischen den übereinander gestapelten Lagen von Betonwaren angeordnet, insbesondere mit einer Ausstreumenge von ca. 5-40 g/m$^2$, insbesondere mit einer Ausstreumenge von ca. 10-30 g/m$^2$ und besonders bevorzugt mit einer Ausstreumenge von 10-15 g/m$^2$.

## Genaue Beschreibung der Erfindung

Die Erfindung wird nun genauer anhand von Ausführungsbeispielen beschrieben.

Beispiel 1: Herstellung von Streugranulat mit einer ersten Zusammensetzung mittels Unterwassergranulierung

Für die Herstellung von Streugranulat mit einer ersten Zusammensetzung wurde eine Ausgangszusammensetzung bereitgestellt, die 60 Gew.-% eines ersten nach DIN EN ISO 13432 biologisch abbaubaren Polymers, nämlich Poly([R]-3-hydroxybutyrat-co-[R]-3-hydroxyhexanoat) (PHBH), Handelsbezeichnung Kaneka X151A, sowie 5 Gew.-% eines zweiten nach DIN EN ISO 13432 biologisch abbaubaren Polymers, nämlich Polymilchsäure (PLA), Handelsbezeichnung Ingeo™ 6260D enthielt. Weiterhin enthielt die Ausgangszusammensetzung 10 Gew.-% Polyvinylacetat (PVAC), Handelsbezeichnung Vinnex 2525, sowie 25 Gew.-% eines faserigen Verstärkungsstoffs, nämlich Holzfaser, Handelsbezeichnung Arbocel C320.

Mit einer Zuführrate von 200 kg/h wurde die Ausgangszusammensetzung einem Doppelschneckenextruder zugeführt, dessen Schneckensegmente aus Förder- und Knetelementen bestehen, und in diesem bei 180 °C plastifiziert. Die Extruderschnecken rotierten dabei mit 160 U/min. Die homogenisierte und plastifizierte Masse wurde anschließend durch eine Düsenplatte mit Öffnungen extrudiert, wobei die Temperatur der plastifizierten Masse vor der Düsenplatte 180 °C betrug. Nach Durchtritt der homogenen Masse durch die Düsenplatte wurden die extrudierten Stränge mittels rotierender Schneidwerkzeuge geschnitten und unter Wasser zu Streugranulatkörnern granuliert.

Die statistische Untersuchung (n = 100) der linsenförmigen (quasi-Ellipsoid) Streugranulatkörner ergab einen mittleren Durchmesser von 5,2 mm mit einer Standardabweichung (1$\sigma$) von 0,4 mm und eine mittlere Höhe von 2,2 mm mit einer Standardabweichung (1$\sigma$) von 0,4 mm.

Durch Änderung des Durchmessers der Düsenöffnungen in der Düsenplatte auf Düsenöffnungen von bis zu 10 mm ließen sich linsenförmige Streugranulatkörner mit einem mittleren Durchmesser von 10 mm und einer über die Rotationsgeschwindigkeiten der Messer einstellbaren Höhe (im Beispiel bis 3 mm) herstellen.

In weiteren Versuchen wurden als faseriger Verstärkungsstoff anstelle der Holzfasern Flachsfasern (Naturfasern), Kohlefasern (C-Fasern) und Glasfasern (mineralische Fasern) verwendet, wobei auf analoge Weise Streugranulatkörner mit der gleichen vorgenannten Geometrie erhalten wurden.

Beispiel 2: Herstellung von Streugranulat mit einer zweiten Zusammensetzung mittels Unterwassergranulierung und anschließendem Formpressen

Für die Herstellung von Streugranulat mit einer zweiten Zusammensetzung wurde eine Ausgangszusammensetzung bereitgestellt, die ausschließlich aus Polymilchsäure (PLA), Handelsbezeichnung Ingeo™ 6260D, bestand.

Die Ausgangszusammensetzung wurde mit einer Zuführrate von 200 kg/h einem Doppelschneckenextruder zugeführt, dessen Schneckensegmente aus Förder- und Knetelementen bestehen, und in diesem bei 180 °C plastifiziert. Die Extruderschnecken rotierten dabei mit 160 U/min.

Die homogenisierte und plastifizierte Masse wurde anschließend durch eine Düsenplatte mit Öffnungen extrudiert, wobei die Temperatur der plastifizierten Masse vor der Düsenplatte 180 °C betrug. Nach Durchtritt der homogenen Masse durch die Düsenplatte wurden die extrudierten Stränge mittels rotierender Schneidwerkzeuge geschnitten und unter Wasser zu Streugranulatkörnern granuliert, wobei bei dieser Zusammensetzung der homogenen Masse anders als in Beispiel 1 keine linsenförmigen Streugranulatkörner erhalten wurden, sondern nahezu kugelförmige, d.h. quasi-sphärische Streugranulatkörner. Die statistische Untersuchung (n = 100) der quasi-sphärischen Granulatkörner ergab einen mittleren Durchmesser von 3,4 mm mit einer Standardabweichung (1$\sigma$) von 0,3 mm.

Die quasi-sphärischen Streugranulatkörner wurden in eine Formpresse mit zylindrischer Kavität gegeben, wobei die Kavität einen Durchmesser von 5,1 mm und eine Höhe von 1,0 mm aufwies. Durch Formpressen mit einem Stempel mit passendem Durchmesser entstanden bei einem Pressdruck von 300 bar Streugranulatkörner, die eine zylindrische Geometrie aufwiesen. Über Auswerfer konnten die Streugranulatkörner aus der Kavität entnommen werden.

Wie aus der nachstehenden Tabelle 1 ersichtlich ist, wurden in verschiedenen Versuchen (V1 bis V6) quasi-sphärische Streugranulatkörner in eine Formpresse mit unterschiedlich dimensionierter Kavität gegeben. Die Abmaße der jeweiligen durch Fompressen erhaltenen Streugranulatkörner sind der Tabelle 1 zu entnehmen, aus der hervorgeht, dass die Streugranulatkörner jeweils Abmessungen, d.h. Längen und Breiten, aufwiesen, die um mindestens den Faktor 1,275 größer waren als die entsprechenden Höhen der Streugranulatkörner.

Tabelle 1: Ergebnisse aus dem Formpressen von quasi-sphärischen Granulatkörnern zu erfindungsgemäß einsetzbaren Streugranulatkörnern

|  | V1 | V2 | V3 | V4 | V5 | V6 |
|---|---|---|---|---|---|---|
| Mittlerer Durchmesser quasi-sphärisches Granulatkorn [mm] | 3,4 | 5,2 | 4,6 | 7,0 | 5,4 | 8,4 |
| Standardabweichung (1σ) | 0,3 | 0,5 | 0,5 | 0,7 | 0,5 | 0,8 |
| Höhe Kavität = Höhe Streugranulatkörner [mm] | 1,0 | 1,0 | 2,5 | 2,5 | 4,0 | 4,0 |
| Durchmesser Kavität = Durchmesser Streugranulatkörner [mm] | 5,1 | 9,7 | 5,1 | 9,6 | 5,1 | 9,9 |
| Standardabweichung (1σ) | 0,1 | 0,1 | 0,1 | 0,1 | 0,1 | 0,1 |

Beispiel 3: Herstellung von Streugranulat mit einer dritten Zusammensetzung mittels Unterwassergranulierung und anschließendem Heißpressen

Für die Herstellung von Streugranulat mit einer dritten Zusammensetzung wurde eine Ausgangszusammensetzung bereitgestellt, die 55 Gew.-% eines Stärke-Blends, Handelsbezeichnung Mater-Bi CF06A, 10 Gew.-% Polycaprolacton (PCL), Handelsbezeichnung Capa™ 6250, 10 Gew.-% eines Verarbeitungshilfsmittels $N,N'$-Ethylendi(stearamid) (EBS), Handelsbezeichnung Addforce SA, sowie 25 Gew.-% eines partikulären Füllstoffs (Holzfaser, Handelsbezeichnung Lignobest C100) enthielt.

Analog zu Beispiel 2 wurden aus der Ausgangszusammensetzung quasi-sphärische Granulate per Heißabschlag unter Wasser geformt. Die getrockneten quasi-sphärischen Granulatkörner wurden einzeln auf ein temperiertes Band (T > $T_g$; im Beispiel für PLA → 80 °C) fallen gelassen. Die temperierten Granulatkörner wurden über das bewegliche Band in eine servohydraulische Presse (Fa. Langzauner, Laborpresse 1.5T) mit temperierbaren Heizplatten gefördert. Dort wurden die Granulatkörner zwischen zwei Platten mit einem Druck von 200 bar auf eine definierte Dicke kalibriert. Ein aufgesprühtes biogene Schalöle enthaltendes biobasiertes Trennmittel verhinderte ein Verkleben der Granulatkörner auf dem Förderband und auf den Kalibrierplatten. Als Ergebnis wurden Streugranulatkörner in einer ellipsoiden bis zylindrischen Form mit einer gewünschten Höhe und einem gewünschten Durchmesser erhalten.

Beispiel 4: Herstellung von Streugranulat mit einer vierten Zusammensetzung mittels Unterwassergranulierung und anschließendem Bandpressen

Für die Herstellung von Streugranulat mit einer vierten Zusammensetzung wurde eine Ausgangszusammensetzung bereitgestellt, die 34 Gew.-% (Polybutylenadipat-terephthalat (PBAT), Handelsbezeichnung Ecoflex® F Blend C1200, 5 Gew.-% Polymilchsäure (PLA), Handelsbezeichnung Ingeo™ 6260D, sowie 61 Gew.-% eines faserigen Füllstoffs (E-Glasfaser, Handelsbezeichnung FGCS-8069-3mm-10my) enthielt.

Analog zu den Beispielen 2 und 3 wurden aus der Ausgangszusammensetzung quasi-sphärische Granulate per Heißabschlag unter Wasser geformt. Die getrockneten quasi-sphärischen Granulatkörner wurden einzeln auf ein temperiertes Band (T > $T_g$; im Beispiel für PLA → 80 °C) einer Doppelbandpresse fallen gelassen. Dort wurden die Granulatkörner zwischen zwei kontinuierlich laufenden Stahlbändern zu erfindungsgemäßen Streugranulatkörnern gepresst, die in einer ersten Dimension eine mindestens um den Faktor 1,275 größere Ausdehnung aufweisen als in einer zweiten Dimension. Ein Abstreifer entfernte die gepressten Granulatkörner nach dem Pressen von den Stahlbändern. Durch Variation des Abstandes der Bänder und des Materialvolumens des Aufgabegutes (quasi-sphärische Granulate) lassen sich Streugranulatkörner mit einer ellipsoiden bis zylindrischen Form herstellen. In Tabelle 2 sind die Ergebnisse von sechs entsprechenden Versuchen zusammengefasst.

Tabelle 2: Ergebnisse aus dem Bandpressen von quasi-sphärischen Granulatkörnern zu erfindungsgemäß einsetzbaren Streugranulatkörnern

| | V1 | V2 | V3 | V4 | V5 | V6 |
|---|---|---|---|---|---|---|
| Mittlerer Durchmesser quasi-sphärisches Granulatkorn [mm] | 3,4 | 5,2 | 4,6 | 7,0 | 5,4 | 8,4 |
| Standardabweichung (1σ) | 0,3 | 0,5 | 0,5 | 0,7 | 0,5 | 0,8 |
| Distanz Stahlbänder = Höhe Streugranulatkörner [mm] | 1,0 | | 2,5 | | 4,0 | |
| mittlerer Durchmesser Streugranulatkörner [mm] | 5,1 | 9,7 | 5,1 | 9,6 | 5,1 | 9,9 |
| Standardabweichung (1σ) | 0,1 | 0,1 | 0,1 | 0,1 | 0,1 | 0,1 |

Beispiel 5: Herstellung von Streugranulat mit einer fünften Zusammensetzung durch Ausstanzen

Für die Herstellung von Streugranulat mit einer fünften Zusammensetzung wurde eine Ausgangszusammensetzung bereitgestellt, die 65 Gew.-% eines ersten nach DIN EN ISO 13432 biologisch abbaubaren Polymers, nämlich Polybutylenadipat-terephthalat (PBAT), Handelsbezeichnung Ecoflex® F Blend C1200, sowie 5 Gew.-% eines zweiten nach DIN EN ISO 13432 biologisch abbaubaren Polymers, nämlich Polymilchsäure (PLA), Handelsbezeichnung Ingeo™ 6260D enthielt. Weiterhin enthielt die Ausgangszusammensetzung 25 Gew.-% eines partikulären Füllstoffs, nämlich Holzmehl, Handelsbezeichnung Lignobest C160, sowie 5 Gew.-% eines faserigen Füllstoffs, nämlich E-Glasfaser, Handelbezeichnung FGCS-8069-3mm-10my.

Aus der vorgenannten Ausgangszusammensetzung wurde eine Platte mit einer gleichmäßigen Dicke von 2,5 mm hergestellt. Dazu wurde die Ausgangszusammensetzung in einem Extruder unter hohem Druck und hoher Temperatur geschmolzen und homogenisiert. Der Schmelzestrang wurde kontinuierlich per Schmelzepumpe durch eine Breitschlitzdüse (Breite: 840 mm, Dicke: 2,5 mm) geführt. Über ein 3-Walzen-Glättwerk (Arbeitsbreite: 1060 mm, Durchmesser 1 und 2: 300 mm, Durchmesser 3: 250 mm) wurde die Platte abgekühlt und weiter auf die gewünschte Dicke (Dickentoleranzen von ± 3 % bis ± 5 %) kalibriert und die Oberfläche geglättet. Die Abkühlung der Platte unterhalb der spezifischen Erweichungstemperatur erfolgte auf einer auf 30 °C temperierten Kühlwalze (Chill roll). Anschließend wurde die gekühlte Platte, die aufgrund der geringen Dicke auch als Folie bezeichnet werden kann, durch eine Schneidrolle geführt. Diese Schneidrolle wies in einer Versuchsreihe Schneidwerkzeuge mit kreisrunden Kavitäten und in einer weiteren Versuchsreihe zwei kreisrunde konzentrische Stanzformen auf, wobei eine der Stanzformen mindestens 25 % größer war als die andere Stanzform, sodass über das Scherschneiden (zwei rotierende Rollen und kontinuierliche Folienzuführung) entweder Zylinder oder Hohlzylinder hergestellt werden konnten, wobei jeweils Stanzreste entstanden.

Die Stanzreste wurden gehäckselt anschließend wieder in die Materialzuführung des Folienextruders gegeben. Auf diese Weise entstehen im kontinuierlichen Prozess praktisch keine Abfälle mehr.

Um das Hängenbleiben der tablettenförmigen Streugranulatkörner in den Schneidrollen zu verhindern, wurde die Schneidrolle von innen heraus unter Luftdruck gestellt, wodurch die Streugranulatkörner ausgeblasen wurden. Alternativ ist hierfür auch das Ausbürsten der Streugranulatkörner mit rotierenden Weich-Kunststoffbürsten geeignet. Zur noch effektiveren Trennung der Streugranulatkörner von den Stanzresten wurde ein Klassiertisch eingesetzt, wodurch vollkommen sortenreine Streugranulatkörner in gewünschter Geometrie produziert werden konnten.

Beispiel 6: Herstellung von Streugranulat mit einer sechsten Zusammensetzung mittels Wasserringgranulierung

Für die Herstellung von Streugranulat mit einer sechsten Zusammensetzung wurde eine Ausgangszusammensetzung bereitgestellt, die 85 Gew.-% eines ersten nach DIN EN ISO 13432 biologisch abbaubaren Polymers, Handelsbezeichnung Bionolle 3000, 5 Gew.-% eines zweiten nach DIN EN ISO 13432 biologisch abbaubaren Polymers, nämlich Polymilchsäure (PLA), Handelsbezeichnung Ingeo™ 6260D, 5 Gew.-% eines ersten Additivs (Maleinsäureanhydrid gepfropftes Polypropylen (MAPP), Handelsbezeichnung AC® 597P MAPP) sowie 5 Gew.-% eines zweiten Additivs (Co-Polymerisationsprodukte von mindestens einem Monomer mit mindestens einer Epoxygruppe und mindestens einem Styrol und/oder (Meth)acrylsäureestermonomer, Handelsbezeichnung JC ADR 4368) enthielt.

Mit einer Zuführrate von 200 kg/h wurde die Ausgangszusammensetzung einem Doppelschneckenextruder zugeführt, dessen Schneckensegmente aus Förder- und Knetelementen bestehen, und in diesem bei 180 °C plastifiziert. Die Extruderschnecken rotierten dabei mit 160 U/min. Die homogenisierte und plastifizierte Masse wurde anschließend durch eine Düsenplatte mit Öffnungen extrudiert, wobei die Temperatur der plastifizierten Masse vor der Düsenplatte 180 °C betrug. Nach Durchtritt der homogenen Masse durch die Düsenplatte wurden die extrudierten Stränge mittels rotierender Schneidwerkzeuge abgeschlagen. Die dabei entstehenden linsenförmigen Granulate wurden in einen umlaufenden Wasserring geschleudert, wobei der Wasserstrom die Streugranulatkörner aus der Granulierhaube förderte. Die statistische Geometrie-Untersuchung (n=100) der linsenförmigen Streugranulatkörner ist in der nachstehenden Tabelle 3 dargestellt.

Tabelle 3: Geometrien der Streugranulatkörner nach Wasserringgranulierung mit unterschiedlichen Lochdurchmessern (Düsenplatte) sowie bei unterschiedlichen Messer-Rotationsgeschwindigkeiten

| Durchmesser d und Höhen h | V1 | | V2 | | V3 | | V4 | | V5 | | V6 | |
|---|---|---|---|---|---|---|---|---|---|---|---|---|
| | d | h | d | h | d | h | d | h | d | h | d | h |
| Mittelwert [mm] | 5,12 | 1,02 | 9,97 | 1,05 | 5,26 | 2,52 | 9,90 | 2,49 | 5,40 | 4,06 | 9,87 | 4,12 |
| Standardabweichung (1σ) | 0,11 | 0,23 | 1,05 | 0,14 | 0,31 | 0,57 | 1,64 | 0,79 | 0,21 | 0,91 | 1,04 | 0,56 |
| Lochdurch-messer Düsenplatte [mm] | 5,0 | | 10,0 | | 5,0 | | 10,0 | | 5,0 | | 10,0 | |
| Messer-Rotationsgeschwindigkeit | 1600 U/min | | | | 800 U/min | | | | 400 U/min | | | |

In einem weiteren Versuch wurde ein kreisrundes Hohlprofil mit definierter Wandstärke über die Verwendung eines entsprechend geformten Profil-Werkzeugs extrudiert. Dieses kreisrunde Hohlprofil wurde in der Wasserringgranulierung auf eine definierte Höhe durch Variation der Messer-Rotationsgeschwindigkeit abgeschlagen. Dabei entstanden Tori bzw. quasi-Tori.

Beispiel 7: Herstellung von Streugranulat mit einer siebenten Zusammensetzung mittels Kaltabschlag

Für die Herstellung von Streugranulat mit einer siebenten Zusammensetzung wurde eine Ausgangszusammensetzung bereitgestellt, die 85 Gew.-% eines aliphatischen Polyesters (Polybutylenadipat-terephthalat (PBAT), Handelsbezeichnung Ecoflex® F Blend C1200), 10 Gew.-% eines die Schmelzefestigkeit steigernden Materials (Polyvinylacetat (PVAC), Handelsbezeichnung Vinnex 2505) und 5 Gew.-% eines partikulären Füllstoffs (Holzmehl, Handelsbezeichnung Arbocel CW 630 PU) enthielt.

Mit einer Zuführrate von 200 kg/h wurde die Ausgangszusammensetzung einem gleichläufigen Doppelschneckenextruder zugeführt, dessen Schneckensegmente aus Förder- und Knetelementen bestehen, und in diesem bei 180 °C plastifiziert. Die Extruderschnecken rotierten dabei mit 160 U/min. Die homogenisierte und plastifizierte Masse wurde anschließend durch eine Düsenplatte mit Öffnungen extrudiert, wobei die Temperatur der plastifizierten Masse vor der Düsenplatte 180 °C betrug. Nach Durchtritt der homogenen Masse durch die Düsenplatte wurden die extrudierten Stränge zum Kühlen durch ein Wasserbad gezogen und anschließend im festen Zustand durch eine rotierende Messerwalze geführt. Durch Variation der Rotations- und Zuführgeschwindigkeit wurde dabei die Geometrie der quasizylindrischen Streugranulatkörner eingestellt.

Die statistische Geometrie-Untersuchung (n=100) der Streugranulatkörner ist in der nachstehenden Tabelle 4 dargestellt.

Tabelle 4: Geometrien der Streugranulatkörner nach Kaltabschlags-Granulierung mit unterschiedlichen Lochdurchmessern (Düsenplatte) sowie bei unterschiedlichen Messer-Rotationsgeschwindigkeiten

| Durchmesser d und Höhen h | V1 | | V2 | | V3 | | V4 | | V5 | | V6 | |
|---|---|---|---|---|---|---|---|---|---|---|---|---|
| | d | h | d | h | d | h | d | h | d | h | d | h |
| Mittelwert [mm] | 5,02 | 1,07 | 9,92 | 1,07 | 5,21 | 2,53 | 9,98 | 2,55 | 5,41 | 4,01 | 9,92 | 4,25 |
| Standard-abweichung (1σ) | 0,11 | 0,24 | 1,05 | 0,15 | 0,31 | 0,57 | 1,66 | 0,81 | 0,21 | 0,90 | 1,05 | 0,58 |
| Lochdurch-messer Düsenplatte [mm] | 5,0 | | 10,0 | | 5,0 | | 10,0 | | 5,0 | | 10,0 | |
| Messer-Rotations-geschwindigkeit | 1600 U/min | | | | 800 U/min | | | | 400 U/min | | | |

In einem weiteren Versuch wurde ein kreisrundes Hohlprofil mit definierter Wandstärke extrudiert. Dieses Hohlprofil wurde in die Strengextrusion eingebracht und per Messer-Granulierung auf eine definierte Höhe abgeschlagen. Dabei entstanden Hohlzylinder.

Beispiel 8: Untersuchung der biologischen Abbaubarbarkeit von erfindungsgemäß verwendetem Streugranulat

Es wurde ein Zersetzungstest des gemäß Beispiel 3 hergestellten Streugranulats durchgeführt. Dabei wurde die Zersetzung unter realen Bedingungen, d.h. bei Verwendung als Distanzmaterial zwischen aufeinander gestapelten Lagen von Pflastersteinen sowie im Boden über einen Zeitraum von 24 Monaten beobachtet. Während dieser Zeitspanne betrug die durchschnittliche Temperatur 8,0 °C und der durchschnittliche Niederschlag betrug 911 mm (L/m$^2$).

Zur Beobachtung der Zersetzung im Boden wurden 30 Proben in nicht verrottbare feinmaschige PA6.6-Netzbeutel (250 $\mu$m Maschenweite) in ca. 10 cm Tiefe im hauptsächlich aus Erde bestehenden Boden angeordnet. Die feinmaschigen PA6.6-Netzbeutel wurden dabei verwendet, um die Wiederfindungsrate von Bruchstücken/Fragmenten zu erhöhen.

Es wurden nun nach 4, 6, 9, 12, 18 und 24 Monaten jeweils 5 der Proben entnommen und auf Zersetzung kontrolliert. Dabei wurde der Masseverlust erfasst und eine Bildanalyse der zersetzten Oberflächen durchgeführt. Es wurde festgestellt, dass die Zersetzung der im Boden angeordneten Proben mit steigender Verweildauer im Boden fortschritt, wobei nach 24 Monaten eine vollständige Zersetzung festgestellt werden konnte.

Unter Anwendungsbedingungen wies das Streugranulat hingegen eine sehr hohe Stabilität auf. Nach 24 Monaten, in denen das Streugranulat als Distanzmaterial zwischen den Lagen von Pflastersteinen angeordnet war, zersetzte es sich nur in sehr geringem Maße. Das Ausmaß der Zersetzung wurde auf < 5 % bestimmt. Dieser vergleichsweise geringe Zersetzungsgrad unter Anwendungsbedingungen wird auf verschiedene Einflussfaktoren zurückgeführt: auf den relativ trockenen, gut durchlüfteten Untergrund, auf die viel geringere Anzahl an Mikroorganismen sowie den höheren pH-Wert des mit dem bioabbaubaren Materials in Kontakt stehenden Wassers.

Es konnte somit gezeigt werden, dass bei der erfindungsgemäßen Verwendung des Streugranulats als Lagenschutz eine sehr geringe Zersetzung im Anwendungszeitraum stattfand, im Boden hingegen eine weitgehende Zersetzung bereits nach wenigen Monaten möglich ist.

**Patentansprüche**

1. Verwendung eines Streugranulats als Distanzmaterial für die Lagerung von Bodenbelagsmaterialien, **dadurch gekennzeichnet, dass** das Streugranulat zu einem Anteil von 39 bis 100 Gew.-% zumindest ein biologisch abbaubares Polymer umfasst, wobei die Streugranulatkörner in einer ersten Dimension eine mindestens um den Faktor 1,275 größere Ausdehnung aufweisen als in einer zweiten Dimension, und wobei das biologisch abbaubare Polymer ein nach DIN EN ISO 13432 biologisch abbaubares Polymer ist.

2. Verwendung nach einem der voranstehenden Ansprüche, **dadurch gekennzeichnet, dass** das zumindest eine nach DIN EN ISO 13432 biologisch abbaubare Polymer ausgewählt ist aus der Gruppe, die Polylactid, Polyhydroxyalkanoat, thermoplastische Stärke, Stärke-Blends, Polycaprolactone, Polybutylenadipat-terephthalat, Polybutylensuccinat, Polybutylensuccinat-adipat, Polysaccharid-Derivate, Lignin-Derivate, Protein-Derivate und Mischungen dieser umfasst.

3. Verwendung nach Anspruch 2, **dadurch gekennzeichnet, dass** das zumindest eine nach DIN EN ISO 13432 biologisch abbaubare Polymer ein Polyhydroxyalkanoat ist und aus der Gruppe ausgewählt ist, die Polyhydroxybutyrat, Polyhydroxyessigsäure, Polyhydroxyvalerat, Poly(3-hydroxybutyrat-co-4-hydroxybutyrat), Poly(3-hydroxybutyrat-co-4-hydroxybutyrat) und Poly(3-hydroxybutyrat-co-4-hydroxybutyrat) umfasst.

4. Verwendung nach einem der voranstehenden Ansprüche, **dadurch gekennzeichnet, dass** das Streugranulat zu mindestens 20 Gew.-% biobasiertes Material enthält.

5. Verwendung nach einem der voranstehenden Ansprüche, **dadurch gekennzeichnet, dass** das Streugranulat einen faserigen Füllstoff enthält.

6. Verwendung nach einem der voranstehenden Ansprüche, **dadurch gekennzeichnet, dass** das Streugranulat einen Gehalt an Additiven aufweist, wobei die Additive aus der Gruppe ausgewählt sind, die partikuläre Füllstoffe, Verarbeitungshilfsmittel, Mittel zur Steigerung der Schmelzefestigkeit, Hydrophobierungsmittel und/oder Kopplungsmittel umfasst.

7. Verwendung nach einem der voranstehenden Ansprüche, **dadurch gekennzeichnet, dass** das Streugranulat zwischen übereinander gestapelten Lagen von Bodenbelagsmaterialien angeordnet wird.

8. Verwendung nach einem der voranstehenden Ansprüche, **dadurch gekennzeichnet, dass** das in dem Streugranulat enthaltene biologisch abbaubare Polymer ein aus Monomeren künstlich synthetisiertes Polymer ist.

9. Verwendung nach einem der voranstehenden Ansprüche, **dadurch gekennzeichnet, dass** das Streugranulat eine Wasserlöslichkeit von < 0,1 mol/L aufweist.

10. Verwendung nach einem der voranstehenden Ansprüche, **dadurch gekennzeichnet, dass** das Streugranulat mit einer Ausstreumenge von ca. 5-40 g/m$^2$ zwischen den übereinander gestapelten Lagen von Bodenbelagsmaterialien angeordnet wird.

11. Verwendung nach einem der voranstehenden Ansprüche, **dadurch gekennzeichnet, dass** die Bodenbelagsmaterialien Betonwaren sind, die aus der Gruppe ausgewählt sind, die Platten, Steine, Dekor-Steine und Pflastersteine umfasst.

**Claims**

1. Use of a spread granulate as a spacer material for the storage of floor covering materials, **characterized in that** the spread granulate comprises at least one biodegradable polymer in a proportion of 39 to 100 % by weight, wherein in a first dimension the spread granulate grains have an extension that is at least 1.275 times larger than in a second dimension and wherein the biodegradable polymer is a polymer which is biodegradable according to DIN EN ISO 13432.

2. Use according to one of the preceding claims, **characterized in that** the at least one polymer that is biodegradable according to DIN EN ISO 13432 is selected from the group comprising polylactide, polyhydroxyalkanoate, thermoplastic starch, starch blends, polycaprolactones, polybutylene adipate terephthalate, polybutylene succinate, polybutylene succinate adipate, polysaccharide derivatives, lignin derivatives, protein derivatives and mixtures thereof.

3. Use according to claim 2, **characterized in that** the at least one polymer that is biodegradable according to DIN EN ISO 13432 is a polyhydroxyalkanoate and is selected from the group comprising polyhydroxybutyrate, polyhydroxyacetic acid, polyhydroxyvalerate, poly(3-hydroxybutyrate-co-4-hydroxybutyrate), Poly(3-hydroxybutyrate-co-4-hydroxybutyrate) and Poly(3-hydroxybutyrate-co-4-hydroxybutyrate).

4. Use according to one of the preceding claims, **characterized in that** the spread granulate contains at least 20% by weight of bio-based material.

5. Use according to one of the preceding claims, **characterized in that** the spread granulate contains a fibrous filler.

6. Use according to one of the preceding claims, **characterized in that** the spread granulate contains a content of additives, the additives being selected from the group comprising particulate fillers, processing aids, agents for enhancing melt strength, hydrophobizing agents and/or coupling agents.

7. Use according to one of the preceding claims, **characterized in that** the spread granulate is arranged between layers of floor covering materials stacked on top of one another.

8. Use according to one of the preceding claims, **characterized in that** the biodegradable polymer contained in the spread granulate is a polymer artificially synthesized from monomers.

9. Use according to one of the preceding claims, **characterized in that** the spread granulate has a water solubility of < 0.1 mol/L.

10. Use according to one of the preceding claims, **characterized in that** the spread granulate is arranged with a scattering amount of approx. 5-40 g/m$^2$ between the layers of floor covering materials stacked on top of one another.

11. Use according to one of the preceding claims, **characterized in that** the floor covering materials are concrete goods which are selected from the group comprising plates, stones, decorative stones and paving stones.

**Revendications**

1. Utilisation d'un produit granulé à répandre en tant que matériau d'espacement pour la pose de matériaux de revêtement de sol, **caractérisée en ce que** le produit granulé à répandre comprend en une proportion de 39 à 100 % en poids au moins un polymère biologiquement dégradable, les grains de produit granulé à répandre présentant dans une première dimension une extension plus grande d'au moins le facteur 1,275 que dans une deuxième dimension, et le polymère biologiquement dégradable étant un polymère biologiquement dégradable selon DIN EN ISO 13432.

2. Utilisation selon l'une quelconque des revendications précédentes, **caractérisée en ce que** ledit au moins un polymère biologiquement dégradable selon DIN EN ISO 13432 est choisi dans le groupe qui comprend le polylactide, le polyhydroxyalcanoate, l'amidon thermoplastique, des mélanges d'amidons, les polycaprolactones, le poly(butylène adipate téréphtalate), le poly(butylène succinate), le poly(butylène succinate adipate), des dérivés de polysaccharides, des dérivés de lignine, des dérivés de protéines et des mélanges de tels polymères.

3. Utilisation selon la revendication 2, **caractérisée en ce que** ledit au moins un polymère biologiquement dégradable selon DIN EN ISO 13432 est un polyhydroxyalcanoate et est choisi dans le groupe qui comprend le polyhydroxybutyrate, le poly(acide hydroxyacétique), le polyhydroxyvalérate, le copolymère 3-hydroxybutyrate/4-hydroxybutyrate, le copolymère 3-hydroxy-butyrate/4-hydroxybutyrate et le copolymère 3-hydroxybutyrate/4-hydroxy-butyrate.

4. Utilisation selon l'une quelconque des revendications précédentes, **caractérisée en ce que** le produit granulé à répandre contient au moins 20 % en poids de matériau à base biologique.

5. Utilisation selon l'une quelconque des revendications précédentes, **caractérisée en ce que** le produit granulé à répandre contient une charge fibreuse.

6. Utilisation selon l'une quelconque des revendications précédentes, **caractérisée en ce que** le produit granulé à répandre présente une teneur en additifs, les additifs étant choisis dans le groupe qui comprend les charges particulaires, les adjuvants de mise en oeuvre, les agents destinés à augmenter le résistance à la fusion, les agents d'hydrophobisation et/ou les agents de couplage.

7. Utilisation selon l'une quelconque des revendications précédentes, **caractérisée en ce que** le produit granulé à répandre est disposé entre des couches de matériaux de revêtement de sol empilées les unes sur les autres.

8. Utilisation selon l'une quelconque des revendications précédentes, **caractérisée en ce que** le polymère biologiquement dégradable contenu dans le produit granulé à répandre est un polymère synthétisé artificiellement à partir de monomères.

9. Utilisation selon l'une quelconque des revendications précédentes, **caractérisée en ce que** le produit granulé à répandre présente une solubilité dans l'eau de < 0,1 mole/l.

10. Utilisation selon l'une quelconque des revendications précédentes, **caractérisée en ce que** le produit granulé à répandre est disposé en une quantité d'étalement d'environ 5-40 g/m$^2$ entre les couches de matériaux de revêtement de sol empilées les uns sur les autres.

11. Utilisation selon l'une quelconque des revendications précédentes, **caractérisée en ce que** les matériaux de revêtement de sol sont des articles en béton qui sont choisis dans le groupe qui comprend les plaques, blocs, blocs décoratifs et blocs à paver.

**IN DER BESCHREIBUNG AUFGEFÜHRTE DOKUMENTE**

**In der Beschreibung aufgeführte Patentdokumente**

- EP 1520871 A1